# EUROPEAN PATENT APPLICATION

(11) **EP 3 242 264 A1**
(43) Date of publication of application: **08.11.2017**
(21) Application number: 15875094.3
(22) Date of filing: 16.12.2015
(51) Int. Cl.: G06Q 30/02

(54) **CUSTOMER VALUE ASSESSMENT METHOD AND SYSTEM**

(30) Priority: 31.12.2014 CN 201410851727
(71) Applicant: China Unionpay Co., Ltd, Pudong New District, Shanghai 200135 (CN)
(72) Inventor: WANG, Jun, Shanghai 200135 (CN)
(74) Representative: Seemann & Partner Patentanwälte mbB
(86) International application number: PCT/CN2015/097598
(87) International publication number: WO 2016/107416

(57) **Abstract**

The present invention provides a method for evaluating customer value, comprising: establishing a merchant database and cardholders' characteristics libraries, and there being an association relationship between the customer set of the merchant database and the cardhold-ers' characteristics library, such that the data corresponding to a card number may be indexed from the cardholders' characteristics libraries by use of the card number in the customer set; upon receiving a pro-cessing request for the cardholder's transaction data, the switching platform processes the transaction data, while acquiring the cardhold-er's card number and an identity of the merchant which the cardholder consumes at; with the cardholder's card number and the merchant identity, acquiring a characteristics data related to the cardholder from the cardholders' characteristics libraries, and acquiring a data related to the merchant which the cardholder consumes at from the merchant database; determining a basic value information of the cardholder based on the data and the characteristics data, and generating a value data of the cardholder specific to the merchant based on the deter-mined value information; transmitting the generated value data to a display component of the merchant, such that the merchant obtains the value information of the cardholder.

## Description

### Related applications

This application is a translation of the international application PCT/CN2015/097598 filed on December 16, 2015, which in turn claims priority from the Chinese application with the official file number 201410851727.0, filed on December 31, 2014. The entire contents of both applications are incorporated herein by reference.

### FIELD OF THE INVENTION

The present application relates to data processing related to transactions, and more particularly, to a method and a system for evaluating customer value.

### BACKGROUND

In the conventional customer relationship management, a merchant may only get the consuming status of a customer in their own store, rather than the consuming status of the customer in other merchants of the same type, therefore the real intention of the customer's choice is unable to be learnt. On the other hand, with respect to the merchants, the conventional customer relationship management system and the payment system are independent of each other, and they require to be maintained separately, causing high maintenance cost. Moreover, small merchants with lower financial capability are unable to maintain the customer relationship management system.

### SUMMARY OF INVENTION

In view of the above, the present invention provides a method for evaluating customer value, the method is used for existing transaction processing systems, said transaction processing system comprising a payment terminal and a switching platform for processing transactions, wherein the method comprising:
a. establishing a merchant database, which includes a basic attribute data of a merchant and a customer set of a merchant, and cardholders' characteristics libraries, which represent the consuming characteristics of cardholders, and wherein there being an association relationship between the customer set in the merchant database and the cardholders' characteristic libraries, such that the data corresponding to a card number may be indexed from the cardholders' characteristics libraries by use of the card number in the customer set;
b. upon receiving a processing request for the cardholder's transaction data, the switching platform processes the transaction data, while acquiring the cardholder's card number and an identity of the merchant which the cardholder consumes at;
c. with the cardholder's card number and the merchant identity acquired in step b, acquiring a characteristics data related to the cardholder from the cardholders' characteristics libraries established in step a, and acquiring a data related to the merchant which the cardholder consumes at from the merchant database established in step a;
d. determining a basic value information of the cardholder based on the data related to the merchant acquired in step c and the acquired characteristics data related to the cardholder, and generating a value data of the cardholder specific to the merchant based on the determined value information;
d. transmitting the generated value data to a display component of the merchant, such that the merchant obtains the value information of the cardholder.

According to the method for evaluating customer value described in the invention, exemplarily, the step a comprises: extracting all the consuming records during a period of time from the historical transaction data, the consuming records comprising the consuming information of the cardholder and the merchant information; based on the extracted consuming records, extracting consuming characteristics data representing a consuming tendency, and establishing the cardholders' characteristics libraries, each of which corresponds to one type of the consuming characteristics; establishing an association relationship between the customer set and the cardholders' characteristics libraries.

The present invention also provides a system for evaluating customer value, the system is applied to the transaction processing system, the transaction processing system comprising a payment terminal and a switching platform for processing transactions, wherein, the system for evaluating customer value electrically connected to the payment terminal and the switching platform respectively, the system for evaluating customer value comprising: a database establishing module used for establishing a merchant database, which includes a basic attribute data of the merchant and a customer set of the merchant, and cardholders' characteristics libraries, which represent the consuming characteristics of the cardholder, and there being an association relationship between the customer set in the merchant database and the cardholders' characteristics libraries, such that the data corresponding to a card number may be indexed from the cardholders' characteristics libraries by use of the card number in the customer set;
a first acquiring module used for acquiring the cardholder's card number and an identity of the merchant which the cardholder consumes at upon the switching platform receiving a processing request for the cardholder's transaction data to process the transaction data;
a second acquiring module used for acquiring the characteristics data related to the cardholder from the established cardholders' characteristics libraries and acquiring the data related to the merchant which the cardholder consumes at from the established merchant database with the cardholder's card number and the merchant identity acquired by the first acquiring module;
a data generating module used for determining a basic value information of the cardholder based on the acquired data related to the merchant and the acquired characteristics data related to the cardholder, and generating a value data of the cardholder specific to the merchant based on the determined value information; and
a transmitting module used for transmitting the generated value data to a display component of the merchant, such that the merchant obtain the value information of the cardholder.

According to the system for evaluating customer value described in the invention, as an example, wherein, the database establishing module comprising: a first unit used for extracting all the consuming records during a period of time from the historical transaction data, the consuming records comprising the consuming information of the cardholder and the merchant information; a second unit used for extracting consuming characteristics data representing a consuming tendency based on the extracted consuming records, and establishing the cardholders' characteristics libraries, each of which corresponds to one type of the consuming characteristics; and a third unit used for establishing an association relationship between the customer set and the cardholders' characteristics libraries.

According to the method and the system described in the invention, the evaluation may be made on the cardholder based on the current card-consuming information of the customer, giving the value of the cardholder specific to the merchant which the cardholder consumes at.

### BRIEF DESCRIPTION OF DRAWINGS

Fig. 1 is a flowchart of the method for evaluating customer value according to an example of the invention.
Fig. 2 is a structure diagram of the system for evaluating customer value according to an example of the invention.
Fig. 3a illustrates, using a Holiday Inn as a merchant, the customer value evaluation of a certain cardholder displayed on a display device of the Holiday Inn.
Fig. 3b is a consuming habit of the cardholder of Fig. 3a at other merchants of the same type, based on which the value evaluation showed as Fig. 3a may be estimated.

### DESCRIPTION OF EMBODIMENTS

The illustrative examples of the invention will now be described with reference of the drawings, where like designations of the drawings denote like elements. The embodiments described hereinafter help those in the art understand the invention more thoroughly, and are intended to be illustrative rather than restrictive. The terms used herein, including scientific terms, technical terms, and industrial terms, have the same meaning as those will be commonly understood by one of ordinary skill in the art, unless specified otherwise.

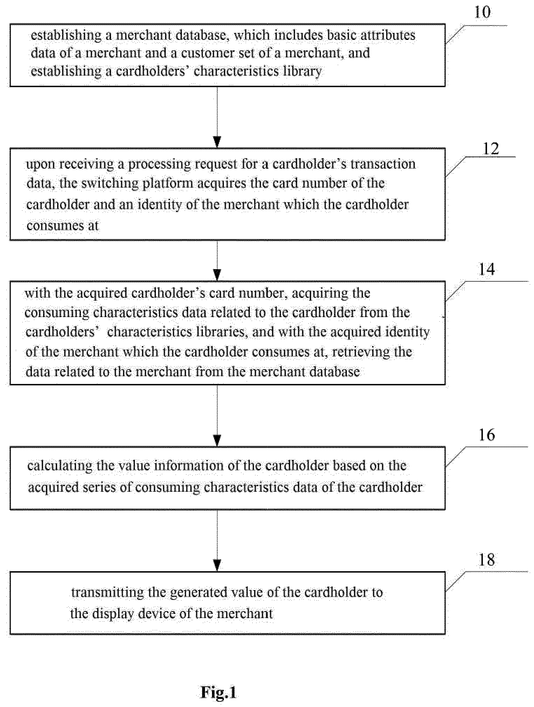

Fig. 1 is a flowchart of the method for evaluating customer value according to the example of the invention. The present invention may be applied to the existing transaction processing system, which includes a payment terminal and a switching platform for processing the transactions. The payment terminal is, for example, a POS terminal, through which a cardholder pays a merchant by swiping a card. The switching platform is composed of the UnionPay system and the issuing bank of a card. After the UnionPay system receives a payment request from a POS terminal, it analyzes the card to obtain its basic information and communicatively connects to the issuer of the card, so that it may cooperate with the issuer to complete the transaction process. It is to be noted that the UnionPay system included in the switching platform mentioned above may also be any other third party platforms and is not limited to be a UnionPay system.

According to the example of the invention, in the step 10 of the method shown in Fig. 1, a merchant database is established, including a basic attribute data of a merchant and a customer set of a merchant, and a cardholders' characteristics library is established, wherein, the basic attribute data of the merchant comprises a location of the merchant and a basic type of the merchant, and so forth. The customer set of the merchant comprises the card information and the cardholder's information of all cardholders who have consumed at the merchant. The card information comprises, for example, a card number, a card type and the issuer of the card. The cardholder's information comprises, for example, the name and the phone number of the cardholder, and so forth. There may be one or more cardholders' characteristics libraries, each characteristics library represents one of the consuming characteristics and a plurality of cardholders is contained therein. For example, if the consuming characteristics represented by characteristics library A is the jewelry consumption, then it is indicated that each cardholder in the cardholders' characteristics library may have the proportion of jewelry consumption higher than the predetermined consuming preferences threshold within his consuming preferences. The characteristics libraries are associated with each other, for example, the characteristics library A may be indexed to the characteristics library B because the cardholder m classified into the characteristics library A is also classified into the characteristics library B which represents dining. It is to be noted that each cardholder has a variety of consumptions during the period of time, according to the invention, the consumption thereof is classified, for example, by types of dining, clothing, jewelry, grocery, business travel, and so forth, and then the proportion of each type in the total consumption thereof is calculated. When the proportion calculated is greater than the predetermined consumption preferences threshold, the cardholder is classified into the corresponding characteristics database, wherein, the value of consumption preferences threshold is, for example, the frequency and the amount specific to a certain type of consumption thereof being above 20% of the total consumption amount during the period of time, the cardholder is considered to have consuming preferences on the type of consumption.

At step 12, when a processing request for the transaction data of the cardholder is received, said switching platform acquires the card number of the cardholder and the identity of the merchant which the cardholder consumes at while processing the transaction data.

At step 14, with the cardholder's card number acquired in step 12, a series of consuming characteristics data related to the cardholder are acquired from the cardholders' characteristics library established in step 10; and with the identity of the merchant which the cardholder consumes at acquired in step 12, the data related to the merchant are retrieved from the merchant database. The data related to the merchant include a basic attribute of the merchant, a customer set of the merchant, and so forth. The basic type of the merchant represents the service type of the merchant, such as consulting service, or the type of merchandise that the merchant sells, for example, the merchant sells jewelry or the merchant is a bakery, etc.

At step 16, the value information of the cardholder is calculated based on the acquired series of consuming characteristics data of the cardholder, the calculated basic value information comprise: the cardholder's previously consuming information at the merchant, the cardholder's consuming information at other merchants in the same industry; subsequently, the value of the cardholder specific to the merchant is generated based on the calculated basic value information.

At step 18, the generated value of the cardholder is transferred to the display device of the merchant, in order for the merchant to obtain the value.

According to one example of the invention, the step 10 in the method shown in accordance with Fig. 1 comprises extracting all of the consuming records during a period of time from the historical transaction data, said consuming records comprise the cardholder's consuming information and the merchant information; extracting the consuming characteristics data representing the consuming tendency based on the extracted consuming records, and establishing the cardholders' characteristics libraries, each of which corresponds to one type of consuming characteristics; and establishing an association relationship between said customer set and said cardholders' characteristics libraries.

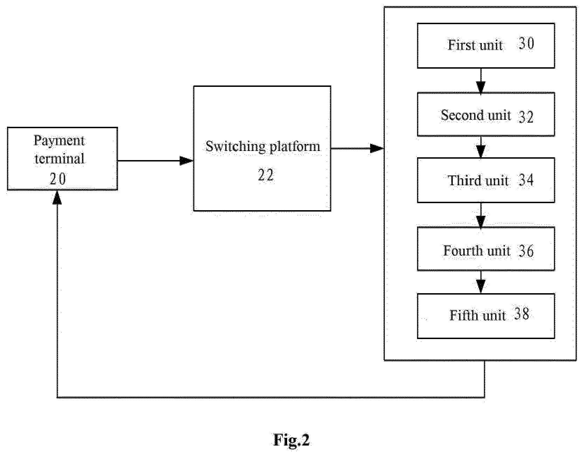

Fig. 2 is a structure diagram of a system for evaluating customer value according to an example of the invention. The system for evaluating customer value is applied to the transaction processing system, which comprises a payment terminal and a switching platform for processing the transactions. The system for evaluating customer value is electrically connected with said payment terminal 20 and the switching platform 22, respectively. The system for evaluating customer value comprises a database establishing module 30, a first acquiring module 32, a second acquiring module 34, a data generating module 36, and a transmitting module 38.

The database establishing module 30 establishes a merchant database, which includes a basic attribute data of a merchant and a customer set of a merchant, and cardholders' characteristics libraries, which represents the consuming characteristics of cardholders, and there being an association relationship between the customer set in the merchant database and the cardholder's characteristics library, such that the data corresponding to a card number may be indexed from the cardholders' characteristics libraries by use of the card number in the customer set. More particularly, there may be one or more cardholders' characteristics libraries, each characteristics library representing one of the consuming characteristics, and there are a plurality of cardholders contained in the library. For example, if the consuming characteristics represented by the characteristics library A are the jewelry consumption, it is indicated that, each cardholder in the cardholders' characteristics library may have the proportion of jewelry consumption higher than the predetermined consuming preferences threshold within his consuming preferences. The characteristics libraries may be associated with each other, for example, the characteristics library A may be indexed to the characteristics library B, because the cardholder m classified into the characteristics library A is also classified into the characteristic library B which represents dining.

The first acquiring module 32 receives the processing request for the cardholder's transaction data at the switching platform 22 to process said transaction data, and acquires the cardholder's card number and the identity of the merchant which the cardholder consumes at. The cardholder sends out a payment request with the payment terminal 20, such as a POS terminal, and the transaction data is processed after the switching platform receives the request. Upon the switching platform 22 receiving the request, the first acquiring module 32 acquires the cardholder's card number and the identity of the merchant which the cardholder consumes at from the switching platform.

With the cardholder's card number and the identity of the merchant which the cardholder consumes at acquired by the first acquiring module 32, the second acquiring module 34 acquires the characteristics data related to the cardholder from the established cardholders' characteristics libraries, and acquires data related to the merchant which the cardholder consumes at from the established merchant database. The data related to the merchant comprise a basic attribute of the merchant, a customer set of the merchant, and so forth. The basic type of the merchant indicates the service type of the merchant, for example, a consulting service, etc., or the type of merchandise which the merchant sells, for example, the merchant sells jewelry or the merchant is a bakery, etc.

The data generating module 36 determines the basic value information of the cardholder based on the acquired data related to the merchant and the acquired characteristics data related to the cardholder, and generates the value data of the cardholder specific to the merchant based on the determined value information. The data generating module 36 calculates the value information of the cardholder based on a series of consuming characteristics data of the cardholder acquired above, the calculated basic value information comprising: a previously consumption information of the cardholder at the merchant, a consumption information of the cardholder at other merchants in the same industry, and so forth; subsequently, the value of the cardholder specific to the merchant is generated based on the calculated basic value information. The transmitting module 38 transmits the generated value data to a display component of the merchant, such that the merchant may obtain the value information of the cardholder.

According to an example of the invention, the database establishing module 30 comprises a first unit for extracting all of the consuming records during a period of time from the historical transaction data, said consuming records comprising the cardholder's consuming information and the merchant information. According to the example, the period of time is, for example, one year. A second unit extracts the consuming characteristics data representing the consumption tendency based on the extracted consuming records, and establishes cardholders' characteristics libraries, each of which corresponds to one type of consuming characteristics, for example, the consuming characteristics for the cardholder to tend to purchase jewelry, the consuming characteristics for the cardholder to tend to dine, the consuming characteristics for the cardholder to tend to travel for business, and so forth. It is to be noted that each cardholder may have a variety of consumption during the period of time, and according to the invention, the consumption thereof is classified, for example, it is classified by the types of dining, clothing, jewelry, grocery, business travel, and so forth, and then the proportion of each type to the total consumption records thereof is calculated. When the calculated proportion is greater than the predetermined consuming preferences threshold, the cardholder is classified into the corresponding characteristics database, wherein, the value of the consuming preferences threshold is, for example, the frequency and the amount specific to a particular type of consumption thereof being above 20% of the total consumption amount thereof during the period of time, the cardholder may be considered to have consuming preferences on the type of consumption.

A third unit is used for establishing the association relationship between the customer set and said cardholders' characteristic libraries, such that the data corresponding to a card number may be indexed from the cardholders' characteristics libraries by use of the card number in the customer set.

The method for evaluating customer value according to the present invention may be embodied in the switching platform, or embodied in some other electronical devices, as long as the electronical devices may communicate with the switching platform. The system for evaluating customer value according to the present invention may be embodied as software or hardware or a combination thereof, and the system for evaluating customer value may be directly embodied in the switching platform, or communicatively connect with the switching platform.

In the method for evaluating customer value and/or the system for evaluating customer value according to the invention, the established merchant database and the cardholders' characteristics libraries may be updated. For example, the transaction data is acquired from the historical data every day to be analyzed, and the updated merchant database and the updated cardholders' characteristics libraries are obtained, wherein the updated merchant database and the updated cardholders' characteristics libraries may completely replace the original ones, or only the newly added data of the merchant database and the newly added data of the cardholders' characteristics libraries may be updated into the merchant database and the cardholders' characteristics libraries respectively. In addition, alternatively, in the case that the merchant database and the cardholders' characteristics libraries have already been established, when the merchant database and the cardholders' characteristics libraries are subsequently updated, the adopted historical data may not include the historical data adopted by the established merchant database and the cardholders' characteristics libraries.

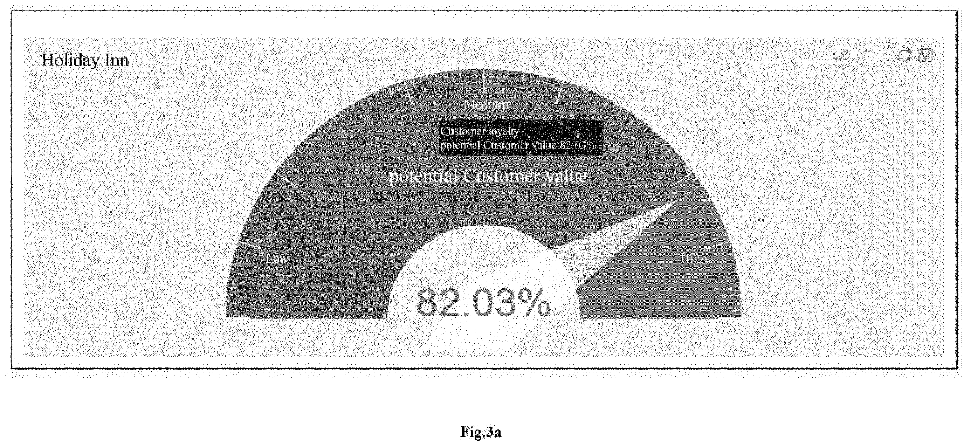

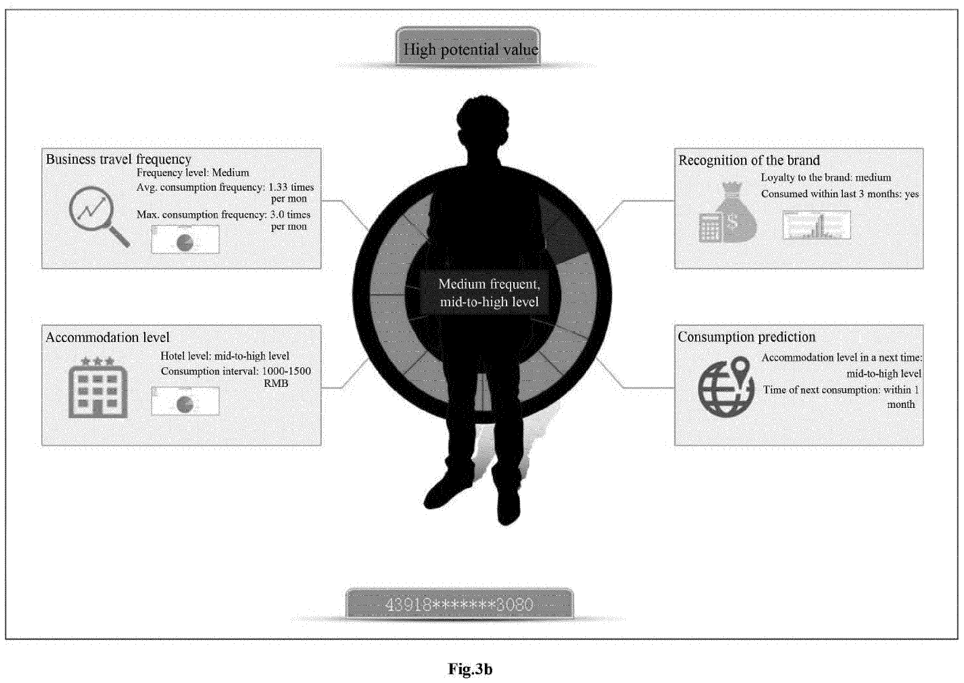

Fig. 3a illustrates, using a Holiday Inn as a merchant, the customer value evaluation of a certain cardholder displayed on a display device of the Holiday Inn. As shown in the figure, for the Holiday Inn, the potential customer value of the cardholder reaches 82.03%. Fig. 3b is a consuming habit of the cardholder of Fig. 3a at other merchants in the same industry, based on which the value evaluation shown as Fig. 3a may be estimated.

## Claims

1. A method for evaluating customer value, the method is used for the existing transaction processing system, said transaction processing system comprising a payment terminal and a switching platform for processing transactions, wherein, the method comprising:
a. establishing a merchant database, which includes a basic attribute data of a merchant and a customer set of a merchant, and cardholders' characteristics libraries, which represent the consuming characteristics of cardholders, and wherein there being an association relationship between the customer set in the merchant database and the cardholders' characteristic libraries, such that the data corresponding to a card number may be indexed from the cardholders' characteristics libraries by use of the card number in the customer set;
b. upon receiving a processing request for the cardholder's transaction data, the switching platform processes the transaction data, while acquiring the cardholder's card number and an identity of the merchant which the cardholder consumes at;
c. with the cardholder's card number and the merchant identity acquired in step b, acquiring a characteristics data related to the cardholder from the cardholders' characteristics libraries established in step a, and acquiring a data related to the merchant which the cardholder consumes at from the merchant database established in step a;
d. determining a basic value information of the cardholder based on the data related to the merchant acquired in step c and the acquired characteristics data related to the cardholder, and generating a value data of the cardholder specific to the merchant based on the determined value information;
d. transmitting the generated value data to a display component of the merchant, such that the merchant obtains the value information of the cardholder.

2. The method of claim 1, wherein, the step a comprising:
extracting all the consuming records during a period of time from the historical transaction data, the consuming records comprising the consuming information of the cardholder and the merchant information;
based on the extracted consuming records, extracting consuming characteristics data representing a consuming tendency, and establishing the cardholders' characteristics libraries, each of which corresponds to one type of the consuming characteristics;
establishing an association relationship between the customer set and the cardholders' characteristics libraries.

3. A system for evaluating customer value, the system is applied to the transaction processing system, the transaction processing system comprising a payment terminal and a switching platform for processing transactions, wherein, the system for evaluating customer value electrically connected to the payment terminal and the switching platform respectively, the system for evaluating customer value comprising:
a database establishing module used for establishing a merchant database, which includes a basic attribute data of the merchant and a customer set of the merchant, and cardholders' characteristics libraries, which represent the consuming characteristics of the cardholder, and there being an association relationship between the customer set in the merchant database and the cardholders' characteristics libraries, such that the data corresponding to a card number may be indexed from the cardholders' characteristics libraries by use of the card number in the customer set;
a first acquiring module used for acquiring the cardholder's card number and an identity of the merchant which the cardholder consumes at upon the switching platform receiving a processing request for the cardholder's transaction data to process the transaction data;
a second acquiring module used for acquiring the characteristics data related to the cardholder from the established cardholders' characteristics libraries and acquiring the data related to the merchant which the cardholder consumes at from the established merchant database with the cardholder's card number and the merchant identity acquired by the first acquiring module;
a data generating module used for determining a basic value information of the cardholder based on the acquired data related to the merchant and the acquired characteristics data related to the cardholder, and generating a value data of the cardholder specific to the merchant based on the determined value information; and
a transmitting module used for transmitting the generated value data to a display component of the merchant, such that the merchant obtain the value information of the cardholder.

4. The system of claim 3, wherein, the database establishing module comprising:
a first unit used for extracting all the consuming records during a period of time from the historical transaction data, the consuming records comprising the consuming information of the cardholder and the merchant information;
a second unit used for extracting consuming characteristics data representing a consuming tendency based on the extracted consuming records, and establishing the cardholders' characteristics libraries, each of which corresponds to one type of the consuming characteristics; and
a third unit used for establishing an association relationship between the customer set and the cardholders' characteristics libraries.
